Europäisches Patentamt

European Patent Office

Office européen des brevets

(11) Veröffentlichungsnummer: **0 366 825**
**A1**

## (12) EUROPÄISCHE PATENTANMELDUNG

(21) Anmeldenummer: 88118343.8

(22) Anmeldetag: 04.11.88

(51) Int. Cl.⁵: **C01F 7/14 , C01F 7/47 ,
//C09C1/40,C08K3/22,
D21H17/67,D21H19/38**

(43) Veröffentlichungstag der Anmeldung:
**09.05.90 Patentblatt 90/19**

(84) Benannte Vertragsstaaten:
**AT BE CH DE ES FR GB GR IT LI LU NL SE**

(71) Anmelder: **VEREINIGTE ALUMINIUM-WERKE
AKTIENGESELLSCHAFT**
**Georg-von-Boeselager-Strasse 25**
**D-5300 Bonn 1(DE)**

(72) Erfinder: **Brown, Neil, Dr.**
**Friedrichstrasse 43**
**D-5300 Bonn 1(DE)**

(54) **Verfahren zur Herstellung von feinem Tabular-Böhmit.**

(57) Die bekannten Verfahren sind für die Herstellung der feinen Böhmitkristalle zur Verwendung als Pigment und/oder Füllstoff nicht geeignet, da deren Produkte zu grob und die Ausbeuten des Böhmits im Vergleich zu den verwendeten Impfermengen relativ niedrig sind. Das neue Verfahren soll ein neuartiges, feines, tafelförmiges, kristallines Böhmit mit einer Partikelgröße zwischen 0,2 bis 0,8 µm liefern, das es geeignet macht für die Verwendung als Pigment- und/oder Füllstoffe in Farben, Papieren, Schreibflüssigkeiten u.ä.

Eine Lauge aus dem Bayer-Prozess oder eine andere $Na_2O$ und $Al_2O_3$ enthaltende Lauge mit einem sauerstoffhaltigen Gas wird bei erhöhter Temperatur und Druck so lange in Berührung gehalten, bis ein Molverhältnis von weniger oder gleich erreicht wird. Die oxidierte Lauge wird dann gekühlt unter den hydrodynamischen Bedingungen einer starken Umrührung, und dadurch wird Keimbildung und Kristallisation von Böhmit eingeleitet. Der gewonnene Böhmit ist tafelförmig und vorzugsweise in feiner Korngröße, zu mehr als 90 % im Bereich von 0,2 bis 0,8 µm.

Verwendung als Pigment/Füllstoff in Papier, Farben, Schreibflüssigkeiten.

EP 0 366 825 A1

## VERFAHREN ZUR HERSTELLUNG VON FEINEM TABULAR-BÖHMIT

Diese Erfindung betrifft ein Verfahren zur Gewinnung von feinem kristallinem alpha-Aluminiummonohydroxid (Böhmit), geeignet zur Verwendung als Pigment/Füllstoff.

Die vorliegende Erfindung führt zu einem Verfahren zur Gewinnung von Böhmitkristallen in der Größe und Form, die geeignet sind zur Verwendung als Pigment/Füllstoff in Papier, Farben und Schreibflüssigkeiten.

Es ist bekannt, daß der Böhmit ($\alpha$-AlOOH) die thermodynamisch stabile Phase des Aluminiummonohydroxid bei Temperaturen oberhalb von 100°C in den Laugen des wohlbekannten Bayer-Prozesses zur Herstellung von Aluminiumoxid aus Bauxit darstellt. Dementsprechend kann bei Temperaturen oberhalb von 100°C aus diesen alkalischen Lösungen des Natriumaluminats Böhmit abgeschieden werden. Obwohl die Anfangsgeschwindigkeit der Böhmitabscheidung sich mit steigendender Temperatur erhöht, kann sich die Ausbeute vermindern, da der Übersättigungsgrad bezüglich Aluminiumoxid kleiner wird.

Der höchste Abscheidungsgrad der Böhmitabscheidung aus den Natriumaluminat-Laugen findet unter hydrothermalen Bedingungen statt, (d.h. unter den Bedingungen von erhöhter Temperatur unter Druck) bei etwa 140°C, bei einer Lauge mit einem Molverhältnis von 1,3, einer Verweilzeit im Autoklaven von 4 bis 12 Stunden und einer hohen Impfmenge von 260 - 340 g/l Böhmitkristalls (vgl. z.B. S.I. Kuznetsow et al. "Abscheidungen aus übersättigter Aluminatlösung bei Temperaturen von 100 - 160°C". Zhurnae Prikl. Khim., 1973, No. 7, Seiten 1574 - 1575).

Der Begriff "Molverhältnis" kann folgendermaßen definiert werden (Mol $Na_2O_{frei}$ in Lösung))/Mol $Al_2O_3$ in Lösung) = 1,645 x [g/l $Na_2O_{frei}$] / [g/l $Al_2O_3$].

In der obigen Gleichung ist $Na_2O_{frei}$ definiert als die Menge von anwesendem NaOH plus dem an $Al_2O_3$ gebundenen Soda.

Beispielsweise eine Bayerlauge, welche 140 g freie Natronlauge (ausgedrückt als $Na_2O_{frei}$) und 177 g/l $Al_2O_3$ enthält, hat ein Molverhältnis von 1,3 entsprechend der obigen Gleichung.

Es ist auch bekannt, daß in Abhängigkeit von der Laugenzusammensetzung bei atmosphärischem Druck und Temperaturen bis zu 140°C aus den Bayer-Laugen kristalliner Böhmit abgeschieden werden kann. Dazu verwendet man 100 g/l sehr feinen gelartigen Böhmitimpfer (z.B. CATAPAL der Fa. Conoco, Inc.) in einer Lauge mit Molverhältnis von 1,4 bis 1,5 und bei einer Verweilzeit von 6 Std. im Autoklaven, wie z.B. beschrieben in der BRD Patentanmeldung DE 35 28 534 von C. Misra et al. vom 8.August 1985.

Jedoch ist keines von den angeführten Verfahren geeignet für die Herstellung der feinen Böhmitkristalle zur Verwendung als Pigment/Füllstoff, da deren Produkte zu grob und darüberhinaus, trotz der Tatsache, daß beide Methoden Impferverfahren sind, sind die Ausbeuten des Böhmits im Vergleich zu den verwendeten Impfermengen relativ niedrig, auch inbezug zu dem hohen $Al_2O_3$-Gehalt der Ausgangslauge. Deshalb ist eine weitere Verarbeitung der Laugen notwendig, so daß nach der Böhmitabscheidung die verbleibenden $Al_2O_3$-Gehalte auf ökonomisches Niveau gesenkt werden können.

Wie in der korrespondierenden U.S. Anmeldung Nr. 847,634 beschrieben, wird aus einer Bayer-Dünnlauge, d.h. einer Lauge mit hohem $Na_2O_{frei}/Al_2O_3$ Molverhältnis und einem niedrigen $Al_2O_3$-Gehalt, wenn die organischen Substanzen oxidiert werden (d.h. ein Verfahren zur Beseitigung von organischen Verunreinigungen, die aus dem ursprünglichen Bauxit herrühren) in Anwesenheit von katalysierenden Kupferionen bis 50% ihres $Al_2O_3$-Gehaltes in der Form eines kupferhaltigen Böhmits abgeschieden. Dieser Prozeß wird unter hydrothermalen Bedingungen (erhöhte Temperatur und Druck) durchgeführt, wobei der kupferhaltige Böhmit als ein Katalysator/Katalysator-Träger System zurückgeführt wird. Auch muß man nicht die Lauge zur Böhmitkristallisation zuimpfen. Darüberhinaus liegt die benötigte Verweilzeit (die Aufenthaltsdauer der zu oxidierenden Lauge im Autoklaven) für beide Verfahren - Oxidation der organischen Substanzen und der Böhmitkristallisation in der Größenordnung von einer Stunde oder weniger. Jedoch die durch dieses Verfahren abgeschiedenen Böhmitpartikel sind für den Einsatz in Farbstoffen, Schreibflüssigkeiten (Tinten) und Füllstoffen ungeeignet wegen ihrer groben Größe (5-15 $\mu$m).

Wie vorher erwähnt, kann keine der Methoden des Standes der Technik feine Böhmitkristalle für die Verwendung als Pigment/Füllstoff erzeugen. Deshalb ist ein neues Verfahren für die Produktion derartiger Böhmitkristalle erforderlich. Der anmeldende Erfinder hat überraschenderweise gefunden, daß, wenn die Karbonisierung einer alkalischen Natriumaluminatlauge, oder einer ähnlichen Lauge mit $Na_2O$ und $Al_2O_3$ bei relativer Abwesenheit kationischer Verunreinigungen wie Kalzium- und Kupferionen stattfindet und wenn die hydrothermale Kristallisation von Böhmit unter den Bedingungen einer starken Rührung erfolgt, dann weisen die entstehenden Böhmitkristalle Korngröße und -form auf, welche sie geeignet macht für die Verwendung als Pigmentstoffe und/oder Füllstoffe in Farben, Papieren, Schreibflüssigkeiten und ähnlichen Produkten. Die Methode der vorliegenden Erfindung kristallisiert mit Vorteil den Böhmit aus der Bayerlauge mit

2

oxidierten organischen Substanzen, (d.h. einer solchen, die dekontaminiert wurde durch den Abbau der Verunreinigungen des organischen Kohlenstoffs), und die deshalb einen niedrigen Gehalt des organischen Kohlenstoffs aufweist und daher relativ farblos ist.

Es ist daher die Aufgabe der vorliegenden Erfindung, einen Prozeß für die Gewinnung eines neuartigen, feinen, tafelförmigen, kristallinen Böhmits zu liefern.

Eine weitere Aufgabe der vorliegenden Erfindung ist es, Böhmitkristalle mit einer Partikelgröße zwischen 0,2 bis 0,8 $\mu$m herzustellen.

"Tafelförmige" Kristalle werden hier folgendermaßen definiert als Kristalle, deren eine Dimension wesentlich kleiner ist als die anderen zwei Dimensionen. "Wesentlich kleiner" wird definiert als daß eine von den durchschnittlichen Abmessungen der Höhe, der Breite oder der Länge weniger als 50% der Kleineren der anderen Dimensionen ist. Es sollte bemerkt werden, daß die tafelförmigen Kristalle von rechteckiger, diamantähnlicher oder sechseckiger Form sein können.

Diese und andere Aufgaben der vorliegenden Erfindung werden dem durchschnittlichen Fachmann aus der vorliegenden Beschreibung, den begleitenden Ansprüchen und beiliegenden Zeichnungen klar.


Kurze Beschreibung der Zeichnungen

Fig. 1 ist ein diagrammatisches Fließbild der bevorzugten Ausführungsweise des Verfahrens gemäß der vorliegenden Erfindung.

Fig. 2 ist eine rasterelektronmikrographische Aufnahme eines Böhmitproduktes, welches gemäß der vorliegenden Erfindung gewonnen wurde, bei Vergrößerungen (a) 10.000 X und (b) 40.000 X.

Fig. 3 ist eine quantitative Bildauswertung der Kristall-Korngrößenverteilung eines gemäß der vorliegenden Erfindung gewonnen Böhmitproduktes.

Fig. 4 ist ein Röntgen-Diffraktogramm des gemäß der vorliegenden Erfindung gewonnen Böhmitproduktes.


Zusammenfassung der Erfindung

Die vorliegende Erfindung betrifft einen Prozeß zur Gewinnung feiner tafelförmiger Böhmitkristalle. Hierzu wird eine Lauge aus dem BayerProzeß oder eine andere $Na_2O$- und $Al_2O_3$- enthaltende Lauge mit einem sauerstoffhaltigen Gas bei erhöhter Temperatur und Druck so lange in Berührung gehalten bis ein Molverhältnis von weniger oder gleich 1 erreicht wird. Die oxidierte Lauge wird dann gekühlt unter den hydronamischen Bedingungen einer starken Umrührung und dadurch wird Keimbildung und Kristallisation von Böhmit eingeleitet. Der gewonnene Böhmit ist tafelförmig und vorzugsweise in feiner Korngröße, zu mehr als 90% im Bereich von 0,2 bis 0,8 $\mu$m.

Wenn die Lauge praktisch frei von kationischen Verunreinigungen wie Kalzium- und Kupferionen (d.h. kleiner als 1 mg/l) ist, liegt der D50 Wert der Kristalle bei 0,4 $\mu$m.


Ausführliche Beschreibung der Erfindung

Gemäß der vorliegenden Erfindung wird die Oxidation der organischen Substanzen in der Bayer-Dünnlauge oder in einer anderen $Na_2O/Al_2O_3$ enthaltenden Lauge in Abwesenheit von Kupferionen durchgeführt und die Böhmitkristallisation findet unter hydrodynamischen Bedingungen statt, d.h. in einem Autoklaven, welcher mit mechanischen Rührern ausgestattet ist. Unter hydrodynamischen Bedingungen versteht man starke Rührung, welche eine schnelle Bewegung der Flüssigkeit während der Reaktion bewerkstelligt. Die Korngröße und -form des resultierenden Produktes führen zu feinem tafelförmigen Böhmit. Die maximale Menge des anwesenden Kupfers in den Kristallen gemäß der vorliegenden Erfindung entspricht weniger als 1 mg/l in der oxidierten Lösung, wobei die Kristallisationsweise des Böhmits der homogenen Keimbildung entspricht. Falls die tafelförmigen Kristalle gemäß der vorliegenden Erfindung als Kristallisationsimpfer verwendet werden, können auch höhere Gehalte an Kupferionen toleriert werden.

Die korrespondierende U.S.-Patentanmeldung Nr. 847,634 lehrt, daß das Molverhältnis von $Na_2O_{frei}$ zu $Al_2O_3$ (d.h. K) auf mindestens 1 durch Laugenkarbonisierung gesenkt werden muß, um die Ausscheidung von Böhmit im Autoklaven während dessen Abkühlung auf die Bedingung der atmosphärischen Temperatur und des Druckes zu gewährleisten.

Ein K-Wert von weniger oder gleich 1 wird auch in dem Verfahren gemäß der vorliegenden Erfindung bevorzugt.

3

Eine Natriumaluminat-Lauge aus dem Bayer-Prozeß oder eine synthetische alkalische Aluminatlauge wird als Ausgangsmaterial bei der Durchführung der vorliegenden Erfindung verwendet. Hierbei wird als die entsprechende Laugenzusammensetzung diejenige bezeichnet, welche im Bayer-Prozeß nach der Ausrührung des Aluminiumhydroxids eintritt, und welche im allgemeinen im Bereich von 120 bis 150 g/l $Na_2O$ und 70 bis 90 g/l $Al_2O_3$ liegt. Typischerweise enthält eine solche Lauge organische Kohlenstoffverbindungen und 20 bis 30 g/l $Na_2CO_3$. Falls die Ausgangslauge eine hohe Konzentration von $Na_2O_{frei}$ bezogen auf $Al_2O_3$ enthält (d.h. K ist höher als 1), dann muß die Konzentration von $Na_2O_{frei}$ gesenkt werden, um das Molverhältnis zu verändern. In einer besonders bevorzugten Arbeitsweise gemäß der vorliegenden Erfindung wird zuerst $CO_2$-Gas in die Lauge mit hohem K-Wert eingeleitet. Infolge der Laugenkarbonisierung fällt die Konzentration von $Na_2O_{frei}$ (durch die teilweise Neutralisation der freien Alkali in dieser Lauge) und das Molverhältnis K sinkt auf weniger oder gleich 1.

Die Menge des eingeleiteten $CO_2$-Gases wird aus der Menge des $Na_2O_{frei}$ berechnet, die zu $Na_2CO_3$ umgewandelt werden muß, um den K-Wert auf weniger oder gleich 1 zu senken. Während der $CO_2$-Gaseinleitung werden kleine Probenmengen (z.B. 2 ml) der Lauge entnommen und deren pH-Werte gemessen. Da durch die Umwandlung von freiem Alkali zu Natriumkarbonat der pH-Wert sinkt, kann hieraus die Menge $Na_2O_{frei}$ berechnet werden. Nachdem das $Na_2O_{frei}$ die benötigte Konzentration erreicht hat, wird die $CO_2$-Einleitung unterbrochen. Dieser Schritt wird bei Temperaturen im Bereich von 50 bis 70°C durchgeführt, vorzugsweise bei 60°C in einem Autoklaven, welcher mit mechanischen Rühreren ausgerüstet ist. (Der Laugengehalt an organischem Kohlenstoff wird danach zu $CO_2$ oxidiert, um hierdurch abschließende Karbonisierung zu erreichen, die benötigt wird, um den K-Wert auf weniger oder gleich 1 zu senken.) Die Lauge wird unter den üblichen Oxidationsbedingungen oxidiert, beispielsweise 300°C, 40 Bar $O_2$ und wird bei dieser Temperatur und diesem Druck während zwischen 60 bis 120 min gehalten, vorzugsweise 90 min. Nach Autoklavenabkühlung wird der Böhmit aus der Lösung ausfallen, wobei der Autoklaveninhalt mechanisch gerührt wird, vorzugsweise durch Rührer, welche mit etwa 1.000 bis 2.000 U/min betrieben werden. Dadurch wird der Böhmit in der gewünschten Kristallgröße und -form gemäß der vorliegenden Erfindung abgeschieden. Die böhmithaltige Suspension wird filtriert, normalerweise unter Vakuum und der Feststoff mit heißem (d.h. 80-95°C) Wasser gewaschen. Die nach der Feststoffabtrennung verbleibende Lauge kann nach Bedarf verdünnt und zu dem Hauptumlauf des Bayer-Prozesses zurückgeführt werden, indem sie einem Kaustifizierschritt unterworfen wird, wobei beispielsweise Branntkalk zur Alkalirückgewinnung verwendet wird.

In einer alternativen Ausführung der Erfindung wird ein anderes sauerstoffhaltiges Gas, wie eine Luft-Sauerstoffmischung, anstelle von Sauerstoffgas als Oxidationsmittel verwendet. Nimmt man dabei dieselbe Gesamtmenge des verwendeten Sauerstoffes an, sollte die Oxidationsreaktion bei höherem Druck durchgeführt werden und dürfte auch längere Verweilzeit erfordern.

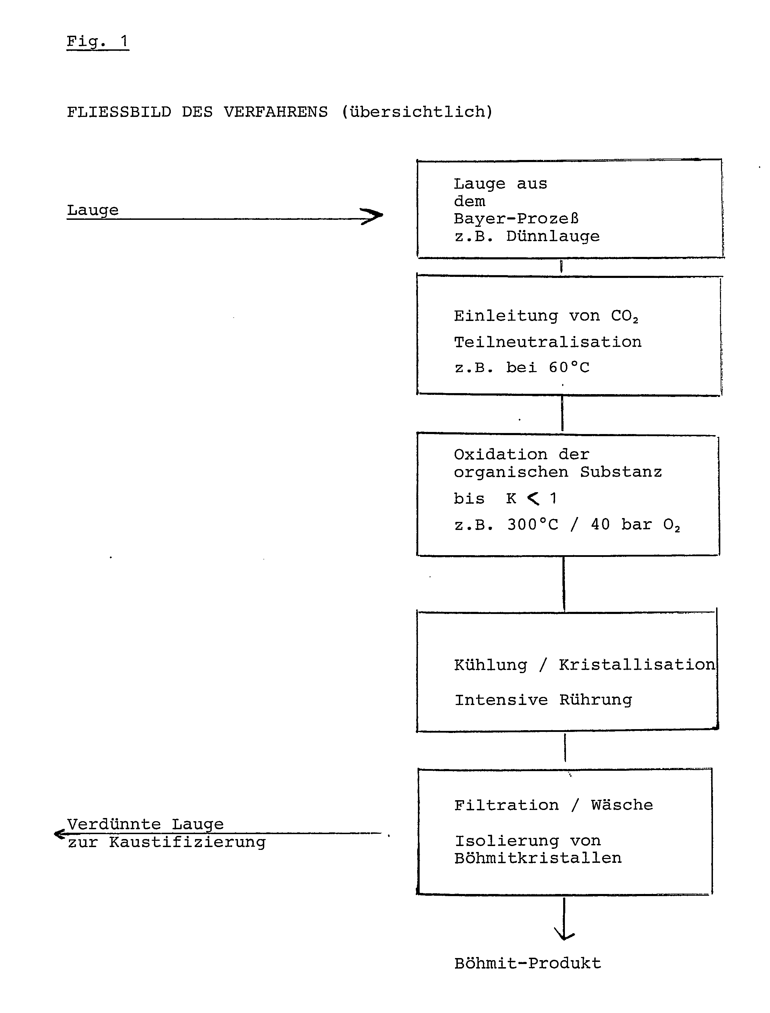

Fig. 1 zeigt im Fließbild mit den für die bevorzugte Durchführungsweise der vorliegenden Erfindung typischen Betriebsbedingungen.

In einer alternativen Durchführungsweise der vorliegenden Erfindung wird vor der Oxidation der Organika Aluminiumhydroxid oder andere Aluminiumverbindungen zu der Lauge zugegeben, um das Molverhältnis einzustellen. Hat die Lauge einen besonders hohen Gehalt an organischem Kohlenstoff (bezogen auf den Molüberschuß des $Na_2O_{frei}$ über den Molen von $Al_2O_3$), dann ist weder die Einleitung von $CO_2$-Gas noch die Zugaben von Aluminiumverbindungen notwendig und die Lauge kann unmittelbar verwendet werden. Dies ist deshalb möglich weil ausreichend $CO_2$ durch die Oxidation von organischem Kohlenstoff entstehen wird um den gewünschten Neutralisationsgrad von Alkali zu erreichen. In diesem letzteren Fall "besonders hoher" Gehalt an organischem Kohlenstoff bedeutet mindestens etwa 20 g Kohlenstoff/l Lauge. Nach der Oxidation der Organika wird die erhaltene Lauge das benötigte Molverhältnis haben, (d.h. weniger oder gleich 1) für die Böhmitgewinnung gemäß der vorliegenden Erfindung. [Die so enthaltene Lauge ist vorzugsweise im wesentlichen frei von organischem Kohlenstoff, wobei unter "wesentlich frei" bedeutet, daß es nicht mehr als 15% des ursprünglichen in dem Kristallisationsschritt anwesendem organischen Kohlenstoff.] Für diese Durchführungsweise sind die geeigneten Betriebsbedingungen wie folgt: Sauerstoffdruck 20 bis 40 bar, Reaktionstemperatur 260°C bis 300°C, Verweilzeit 60 bis 120 min, Kristallisationstemperatur des Böhmits 140 bis 150°C, Drehzahl des Rührers 1000 bis 2000 UpM und Verweilzeit in dem Kristallisationsschritt 30 bis 60 min. Der Drehzahl von 1000 UpM wird Vorzug gegeben. Eine niedrigere Rührung bezogen auf die Energiezufuhr hängt von dem Typ des Rührers ab. Das Ziel ist es, die Agglomeration der entstehenden Böhmitkristalle zu verhindern.

In einer weiteren alternativen Ausführungsweise der Erfindung werden organische Kohlenstoffverbindungen, die normalerweise in dem Bayer-Laugen anwesend sind, zugegeben um die Gehalte des $Na_2O_{frei}$ in der alkalischen Aluminatlauge durch organische Karbonisierung zu senken. Die Mengen solcher Verbindungen werden entsprechend der Zusammensetzung der zu oxidierenden Lauge festgesetzt, d.h. entsprechend

der Menge des $Na_2O_{frei}$, welche karbonisiert werden soll (1 Mol organischen Kohlenstoffs wird nach Oxidation 1 Mol $Na_2O_{frei}$ karbonisieren).

Die Einleitung von $CO_2$-Gas in die Bayerlauge vor der Oxidation der organischen Substanz hat zwei Gründe: Es garantiert, daß das Molverhältnis (der K-Wert), welches während der Oxidation der organischen Substanz sich einstellt, wird in der Praxis kleiner sein als oder gleich 1 (ohne daß man den Laugengehalt an organischer Substanz messen muß) und die Reationszeit kann verkürzt werden.

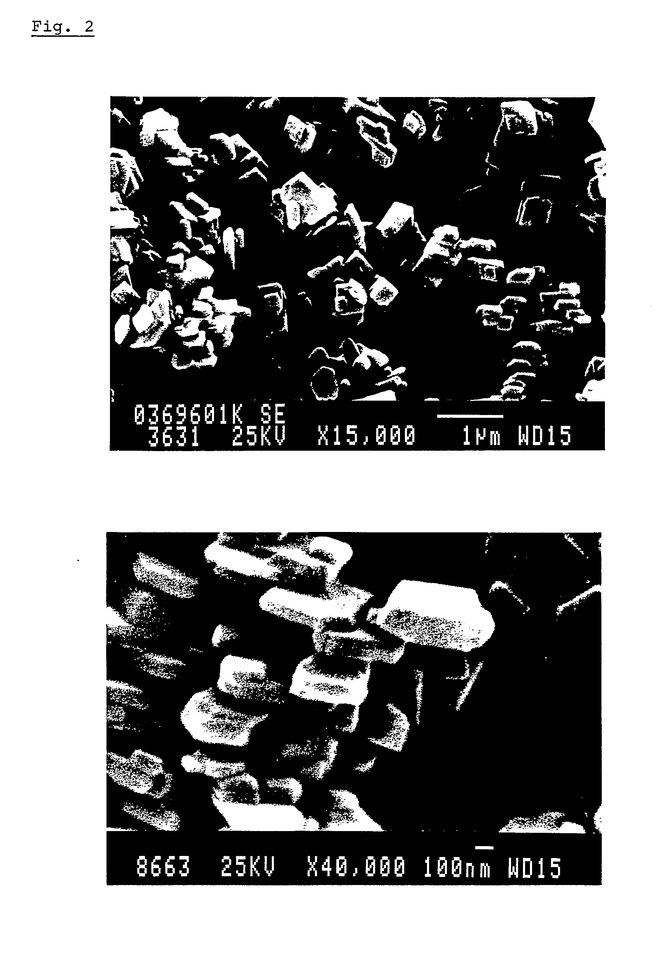

Fig. 2 zeigt eine rasterelektronmikroskopische Aufnahme, welche ein Exemplar eines feinen kristallinen Böhmitproduktes, welches mittels der Methode der vorliegenden Erfindung gewonnen wurde. Das Mikrograph zeigt deutlich die Feinheit des Böhmits und die deutliche Tafelform der Kristalle. Die Kristalle haben einige praktisch ebene Oberflächen, wobei zwei gegenüberliegende Flächen bedeutend größere Oberflächen haben als die übrigen Flächen. Als "bedeutend größere Oberfläche" wird eine solche bezeichnet, die mindestens zweimal so groß ist.

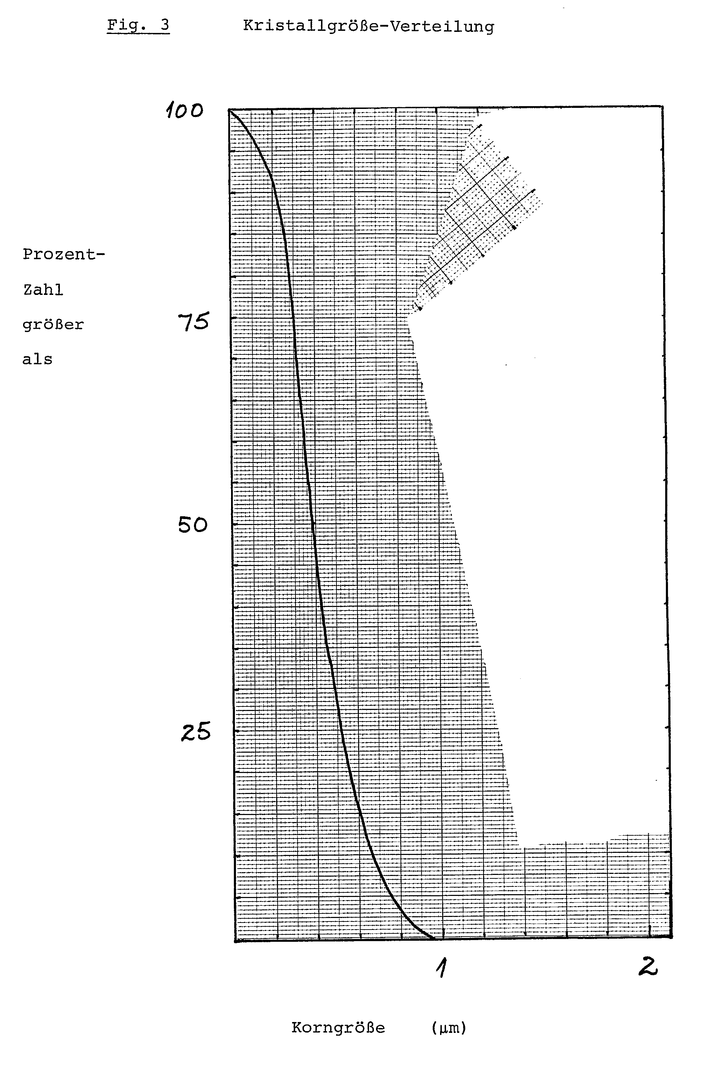

Die Korngrößenverteilung wurde durch die quantitative Bildanalyse ermittelt. Die quantitative Bildanalyse wird wie folgt durchgeführt. Vergrößerte rasterelektronmikroskopische Aufnahmen des tafelförmigen Böhmits werden verwendet, um die Kristallgrößenverteilung zu bestimmen. Eine Videokamera überträgt das Bild eines Mikrographs auf einen fernsehähnlichen Bildschirm. Dieser Bildschirm wird durch einen Lichtschreiber aktiviert bei Umschreiben des Umrisses jedes Kristalls. Der computergesteuerte Bildanalysator liefert die beste Anpassung für jeden Kristall und zeigt die Durchschnittsdurchmesserverteilung der Böhmitkristalle an. Einzelne Kristalle innerhalb der Agglomerate wurden visuell getrennt, während polykristalline Aggregate ähnlich behandelt wurden und individuelle Kristalle wurden nur dann abgetrennt, wenn keine klare Symmetriebeziehung zu erkennen war. Eine Darstellung der quantitativen Bildanalyse zeigt Fig.3.

Die Durchschnitt-Partikelgröße ist 0,5 $\mu$m mit dem Korngrößenbereich von etwa 0,2 bis zu 0,8 $\mu$m.

Weitere physikalische und chemische Eigenschaften des Böhmitprodukts wurden wie folgt ermittelt.

| | |
|---|---|
| Spezifische Oberfläche (bestimmt durch Gasadsorption) | 5,0 m$^2$/g |
| Glühverlust | 15% |
| Gesamt $Na_2O$ | 0,20% |

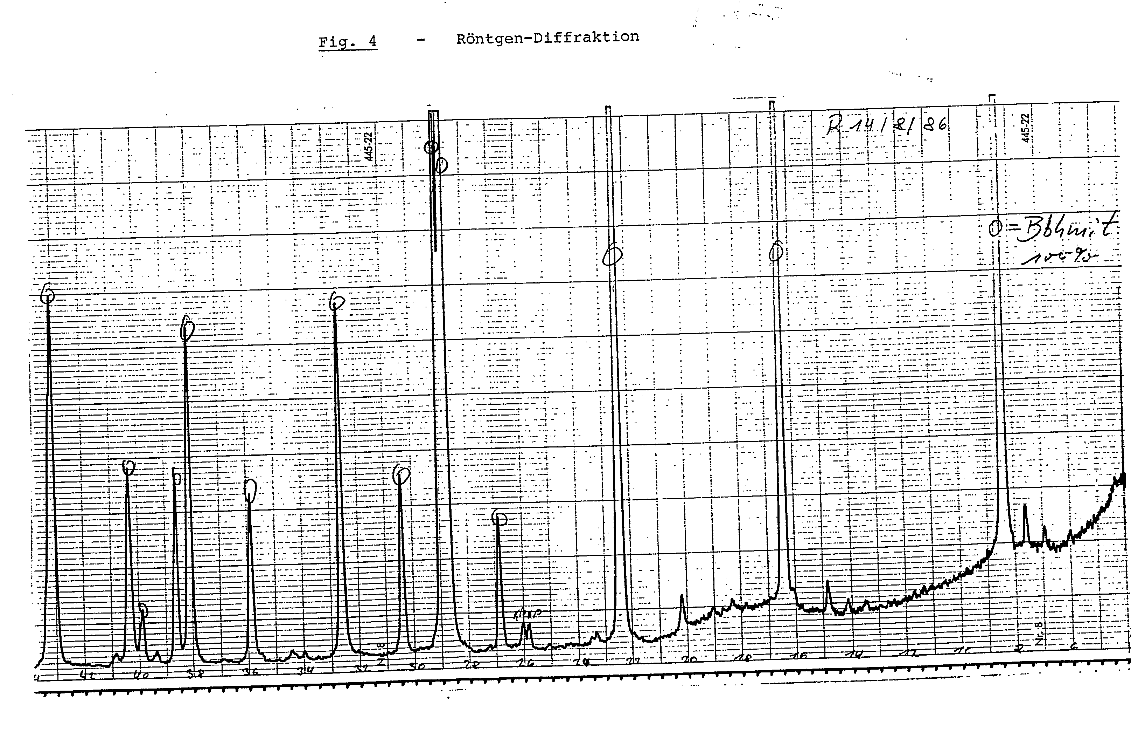

Der hohe Kristallinitätsgrad des Böhmitprodukts und die vollständige Abwesenheit jeder anderen Form des Aluminiumhydroxids wurden durch Röntgen-Diffraktion bestätigt. Das Diffraktogramm zeigt Fig. 4 und der einzige Peak im Bereich des Aluminiummonohydroxids entspricht 100% Böhmit, d.h. alles durch vorliegende Verfahren ausgeschiedene Aluminiummonohydroxids ist Böhmit.

Darüberhinaus hat der anmeldende Erfinder festgestellt, daß ein bedeutender Anteil (bis zu 40%) der entstehenden Kristalle eine neue und unerwartete pseudo-hexagonale Form aufweist, die für Böhmitkristalle unüblich ist.

Die vorliegende Erfindung wird weiter unten in einem spezi fischen Beispiel beschrieben, das die Durchführung der Erfindung beschreiben soll, ohne jedoch deren Bereich einzugrenzen.

Beispiel

Ein Liter Bayer-Dünnlauge mit der nachfolgenden Zusammensetzung:

| | |
|---|---|
| $Na_2O_{frei}$ | 139 g/l |
| $Al_2O_3$ | 82 g/l |
| Organischer Kohlenstoff | 16,7 g/l |
| Natriumoxalat | 2.1 g/l |
| Kalzium | < 1 mg/l |
| Kupfer | < 1 mg/l |

wurde mit $CO_2$ begast bei atmosphärischer Temperatur und Druck in einem 3 l Autoklaven aus einer Nickellegierung (Inconel), welcher mit einem mechanischen Rührer mit bis zu 2000 UpM ausgerückt war. Infolge Laugenkarbonisierung sank die $Na_2O_{frei}$-Konzentration von 139 auf 112 g/l. Danach wurde in den Autoklaven Sauerstoffgas eingeleitet bis zu einem Druck von 40 bar (gemessen bei 25° C) und die Autoklaventemperatur wurde auf 300° C erhöht und 90 min lang aufrechterhalten. Danach war die Zusammensetzung der oxidierten Lauge im Autoklaven wie folgt:

| $Na_2O_{frei}$ | 46 g/l |
|---|---|
| $Al_2O_3$ | 82 g/l |
| Organischer Kohlenstoff | 3,4 g/l |
| Natriumoxalat | 4,9 g/l |

Der Oxidationswirkungsgrad der organischen Substanz (d.h. die prozentuale Senkung an organischem Kohlenstoff) betrug somit ca. 80%.

Der Zahlenwert von K für die oxidierte Lauge aus dem obigen Beispiel war 0,92 (d.h. 46/82 x 1,645). Nach Abkühlung auf etwa 90° C, wofür 30 bis 60 min benötigt wurden, schied aus der oxidierten Lauge während des Kühlungsschrittes des Böhmit in einer Menge entsprechend 43 g/l $Al_2O_3$. Die böhmithaltige Suspension wurde filtriert und der Feststoff mit heißem Wasser gewaschen. Die Flüssigkeit nach der Feststoffabtrennung wurde mit Wasser verdünnt und in den Hauptstrom des Bayer-Prozesses zurückgeführt, nachdem mit Branntkalk in einem Kaustifizierschritt behandelt wurde, um das Akali zurückzugewinnen, in der üblichen Weise.

Die vorliegende Erfindung wurde im vorhergehenden beschrieben mit Hinweisen auf die bevorzugten Durchführungsweisen. Dem Durchschnittsfachmann dürfte es klar sein, daß viele Erweiterungen, Unterlassungen oder Ersatz gemacht werden können, ohne von dem Geiste und Umfang der nachstehend beanspruchten Erfindung abzurücken.

## Ansprüche

1. Verfahren zur Gewinnung feiner tafelförmiger Kristalle des alpha-Aluminiummonohydroxids, gekennzeichnet durch folgende Schritte:
Einstellung einer kaustischen Aluminatlauge bei Temperaturen über 100° C, bis das Molverhältnis der Lauge $Na_2O_{frei}/Al_2O_3$ weniger oder gleich 1 wird;
Abkühlung dieser Lauge unter den hydrodynamischen Bedingungen einer intensiven Rührung, um die Keimbildung des alpha-Aluminiummonohydroxids einzuleiten und Abtrennung eines alpha-Aluminiummonohydroxidproduktes in feiner Größe und Tafelform.

2. Verfahren nach Anspruch 1, dadurch gekennzeichnet, daß das Molverhältnis der Lauge eingestellt wird durch die Zugabe von Aluminiumhydroxid oder anderen löslichen Aluminiumverbindungen in die Lauge.

3. Verfahren nach einem der vorhergehenden Ansprüche, dadurch gekennzeichnet, daß das Molverhältnis der Lauge erreicht wird, durch eine Gasbehandlung mit Sauerstoff und/oder Kohlendioxid.

4. Verfahren nach einem der vorhergehenden Ansprüche, dadurch gekennzeichnet, daß das Molverhältnis in der Lauge dadurch erreicht wird, daß man organische Kohlenstoffverbindungen zu der Lauge vor der Oxidation zugibt.

5. Verfahren nach einem der vorhergehenden Ansprüche, dadurch gekennzeichnet, daß man von einer Bayer-Prozeß-Lauge mit einem Gehalt an organischem Kohlenstoff ausgeht, der ausreicht, um das Molverhältnis weniger oder gleich 1 zu erreichen.

6. Verfahren nach einem der vorhergehenden Ansprüche, dadurch gekennzeichnet, daß die Menge an organischem Kohlenstoff in der Bayer-Lauge größer oder gleich 20 g/l beträgt.

7. Verfahren nach einem der vorhergehenden Ansprüche, dadurch gekennzeichnet, daß die Einstellung des Molverhältnisses durch Bildung von $CO_2$ in der Lauge ermöglicht wird.

8. Verfahren nach einem der vorhergehenden Ansprüche, dadurch gekennzeichnet, daß die Lauge einen Gehalt von kationischen Verunreinigungen an Kalzium- und Kupferionen von weniger als 1 mg/l aufweist.

9. Verfahren nach einem der vorhergehenden Ansprüche, dadurch gekennzeichnet, daß die Temperatur, bei der das Molverhältnis eingestellt wird, im Bereich von etwa 150° C bis etwa 300° C liegt.

10. Verfahren nach einem der vorhergehenden Ansprüche, dadurch gekennzeichnet, daß die Herstellung der Lauge mit einem Molverhältnis von weniger oder gleich eins vorgenommen wird durch die Erhöhung der Konzentration des organischen Kohlenstoffs in dieser Lauge, welche ein Molverhältnis von mehr als 1 hat, mit nachfolgender Einleitung von $O_2$- oder $CO_2$-Gas bis eine Oxidation des organischen

Kohlenstoffs unter $CO_2$-Bildung stattfindet, und dieses $CO_2$ die Konzentration von $NA_2O_{frei}$ herabsetzt und dadurch eine Lauge mit einem Molverhältnis von weniger oder gleich 1 und im wesentlichen frei von organischem Kohlenstoff, hergestellt wird.

11. Verfahren nach einem der vorhergehenden Ansprüche, dadurch gekennzeichnet, daß das Molverhältnis weniger oder gleich 1 erreicht wird ausgehend von einer Bayer-Lauge, welche mindestens einen solchen Gehalt an organischem Kohlenstoff im Überschuß zu der Menge enthält, welche nach ihrer Oxidation eine entsprechende Menge von freiem Alkali zu Karbonat umwandelt und dadurch das Molverhältnis auf weniger oder geich 1 herabsetzt.

12. Verfahren nach einem der vorhergehenden Ansprüche, dadurch gekennzeichnet, daß die Oxidation des organischen Kohlenstoffs mit sauerstoffhaltigem Gas bei erhöhter Temperatur zwischen etwa 260 bis etwa 300° C und erhöhten Drücken zwischen etwa 20 bis etwa 150 bar $O_2$ während einer Verweilzeit, die ausreichend ist zur Oxidation des organischen Kohlenstoffs, durchgeführt wird, so daß die Lauge nicht mehr als etwa 15% des organischen Kohlenstoffs während der Kristallisation enthält.

13. Feine tafelförmige Kristalle des alpha-Aluminiummonohydroxids, deren mittlerer Korndurchmesser bei 0,4 $\mu$m mit 40% dieser Kristalle in pseudo-hexagonaler Form liegt.

14. Kristalle nach Anspruch 8, dadurch gekennzeichnet, daß die Korndurchmesser zu mehr als 90% zwischen 0,2 und 0,8 $\mu$m liegen.

15. Kristalle nach einem der Ansprüche 13 und 14, dadurch gekennzeichnet, daß die eine der Kristallabmessungen Höhe, Breite und Länge weniger als etwa 50% der Kleineren der anderen zwei Abmessungen beträgt.

**Fig. 1**

FLIESSBILD DES VERFAHRENS (übersichtlich)

Lauge $\longrightarrow$

| Lauge aus dem Bayer-Prozeß z.B. Dünnlauge |
|---|

| Einleitung von $CO_2$ Teilneutralisation z.B. bei 60°C |
|---|

| Oxidation der organischen Substanz bis K $<$ 1 z.B. 300°C / 40 bar $O_2$ |
|---|

| Kühlung / Kristallisation Intensive Rührung |
|---|

Verdünnte Lauge zur Kaustifizierung $\longleftarrow$

| Filtration / Wäsche Isolierung von Böhmitkristallen |
|---|

$\downarrow$

Böhmit-Produkt

**Fig. 1**

Fig. 2

Fig. 3    Kristallgröße-Verteilung

Prozent-
Zahl
größer
als

100

75

50

25

1          2

Korngröße    (µm)

# Fig. 4 — Röntgen-Diffraktion

EP 0 366 825 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 147 167 (ALCOA) <br> * Ansprüche * <br> --- | 1-3 | C 01 F 7/14 <br> C 01 F 7/47 // <br> C 09 C 1/40 <br> C 08 K 3/22 <br> D 21 H 17/67 <br> D 21 H 19/38 |
| A | EP-A-0 271 104 (ALCOA) <br> * Ansprüche * <br> --- | 13-15 | |
| A | EP-A-0 197 269 (VAW) <br> * Figur 1 * <br> --- | 1 | |
| A | DE-A-2 616 182 (NORSK HYDRO) <br> ----- | | |

RECHERCHIERTE
SACHGEBIETE (Int. Cl.5)

C 01 F 7/00

Der vorliegende Recherchenbericht wurde für alle Patentansprüche erstellt

| Recherchenort | Abschlußdatum der Recherche | Prüfer |
|---|---|---|
| DEN HAAG | 14-06-1989 | ZALM W.E. |